# EUROPEAN PATENT APPLICATION

(11) **EP 2 530 603 A1**
(43) Date of publication of application: **05.12.2012**
(21) Application number: 11173071.9
(22) Date of filing: 07.07.2011
(51) Int. Cl.: G06F 17/21, G06F 17/30, G06T 11/00

(54) **Dynamic display of content using an electronic device**

(30) Priority: 03.06.2011 US 152990
(71) Applicant: Research In Motion Limited, Waterloo, ON N2L 3W8 (CA)
(72) Inventor: Steele, Jay David, Bedford, Nova Scotia B4B 0G4 (CA); Johansen, Shaun Roger, Bedford, Nova Scotia B4B 0G4 (CA); Morgan, Glen Dwayne, Bedford, Nova Scotia B4B 0G4 (CA)
(74) Representative: Moore, Barry

(57) **Abstract**

A device, system and method are provided for processing and displaying content received in a content feed. Dimensions of a page layout area available to display a articles are determined, and a page layout is generated with a first layout region whose size is based at least in part on the content of a first article, and a second layout region occupying a subdivision of the remaining area of the page layout area. The second layout region position and size is thus determined by the page layout area dimensions and size of the first layout region. A further layout region may be defined in the remaining area of the page layout area after the second layout region is defined, again based on the page layout area dimensions and the size of the second layout region. Articles are then laid out in a corresponding one of the layout regions for display.

## Description

This application claims priority to United States Patent Application No. 13/152,990, filed 3 June 2011.

The present disclosure relates generally to the dynamic display of content by an electronic device, and in one embodiment, to the dynamic display of a syndicated content feed.

A common method of publishing timely and frequent updates to content-news headlines, articles, announcements, blog posts, forum postings and the like-is publication of content feeds employing standardized formats, such as Really Simply Syndication, Atom Syndication Format, and other web feeds. The entries of a standardized content feed may include full or summarized text, references to optional images and other objects, and appropriate metadata. The content of a given entry in a content feed may vary in length based on the source data used to populate the entry. For example, the content of some entries may consist of only a title and a brief summary regarding a more complete article not included within the content feed, while the content of other entries may comprise a long description consisting of an entire article, together with references to image files or other embedded content. Each entry in a content feed may include various combinations of data, such as: title, summary, excerpt, full length article, metadata, references to images, embedded content, and/or a link to source publication.

Because the amount of data and length of individual entries within a given feed can vary, when the content feed is displayed at a user device the amount of screen space used will likewise vary and may be somewhat unpredictable. Typical reader applications for presenting feed content to a user on a device display the entries in a linear, vertical presentation mode, typically arranged in reverse chronological order. This presentation mode may be considered efficient in that it can accommodate entries of any length; however, such a presentation precludes a side-by-side layout that may be more appropriate for presenting multiple articles to a user at once.

### GENERAL

The embodiments described herein relate generally to a device, system and method for processing and displaying content received in a content feed. For example, embodiments of this disclosure may provide for improved layout and display of the content using an electronic device. In this disclosure, the generation of a page layout (also referred to as laying out, or laid out) refers to the organization of content regions (referred to as layout regions) within a display area. The display area is used to display a "page" (e.g. one screen of data) with content arranged according to the page layout.

There may be provided a method in an electronic device, the method comprising: determining dimensions of a page layout area available to display a plurality of articles including a first article and a second article; generating a page layout including at least a first layout region and a second layout region within the page layout area, a size of the first layout region based at least in part upon content of the first article, and the second layout region occupying a subdivision of a remaining area of the page layout area not occupied by the first layout region, a size and position of the second layout region thus being dependent in part on at least the dimensions of the page layout area and the size of the first layout region; and displaying the first article in the first layout region and the second article in the second layout region in accordance with the page layout.

In one aspect, the dimensions of the page layout area may be determined based upon an orientation of the electronic device. In some embodiments, the dimensions of the page layout area may be limited by the physical dimensions of the electronic device.

In another aspect, the method may further comprise receiving the plurality of articles in a content feed, each of the plurality of articles including one or more article elements.

In yet another aspect, the page layout may be generated in further dependence on how many articles are included in the plurality of articles.

In a further aspect, the page layout may be generated in further dependence on a quantity of article elements associated with ones of the plurality of articles.

In still a further aspect, the page layout may be generated in further dependence on whether a media element is associated with ones of the plurality of articles.

In another aspect, the plurality of articles may comprise a syndicated content feed document.

The method, in still another aspect, may provide for determining an article layout for the first article within the first layout region based at least in part upon content of the first article and the size of the first layout region.

In still a further aspect, said generating may comprise subdividing the remaining area of the page layout area into one or more subdivisions having at least a minimum dimension and that are either horizontally adjacent or vertically adjacent to the first layout region; and assigning the second layout region to occupy one of said one or more subdivisions.

Further, in other aspects the size and position of the first layout region may be based upon a reference point of the page layout area. Still further, the reference point is an upper left-hand corner of the page layout area.

In yet another aspect, a size and position of the second layout region may be based upon a second reference point relative to said one of said one or more subdivisions.

In still another aspect, said generating may further comprise: determining a new remaining area of said one of said one or more subdivisions not occupied by the second layout region; subdividing the new remaining area into one or more new subdivisions having at least the minimum dimension and that are either horizontally adjacent or vertically adjacent to the second layout region; and assigning a third layout region to occupy one of said one or more new subdivisions.

Further, in another aspect, subdividing the new remaining area may comprise: if during the subdividing one of the one or more new subdivisions does not have at least the minimum dimension, including the area of said one of the one or more new subdivisions as part of the second layout region.

There may also be provided a method in an electronic device, the method comprising: receiving a plurality of articles in a content feed; determining dimensions of a page layout area available to display the plurality of articles; generating a page layout by: assigning a first layout region to occupy the page layout area, a size of the first layout region being based at least in part upon content of a first article of the plurality of articles; subdividing a remaining area of the page layout area not occupied by the first layout region into one or more subdivisions having at least a minimum dimension, each of said one or more subdivisions being either horizontally adjacent or vertically adjacent to the first layout region; and for each of the one or more subdivisions as a new layout area, assigning a further layout region corresponding to a further article of the plurality of articles to occupy said subdivision; subdividing a further remaining area of the new layout area not occupied by said further layout region into a further one or more subdivisions having at least the minimum dimension, each of said further one or more subdivisions being either horizontally adjacent or vertically adjacent to said further layout region; and repeating said assigning and subdividing for each of said further one or more subdivision until a dimension of a remaining subdivision after said subdividing is less than the minimum dimension; and displaying the first article in the first layout region and each further article in the corresponding further layout region in the page layout area in accordance with the page layout.

There may also be provided a computer readable medium, which may be non-transitory, comprising program code which, when executed by a device comprising a processor, causes the device and/or processor to carry out the foregoing method and various aspects.

There may also be provided an electronic device configured to implement the foregoing method and various aspects. In particular, there is provided an electronic device, comprising: a display interface; and a processor in communication with the display interface and configured to execute computer readable instructions stored in a memory to: determine dimensions of a page layout area available to display a plurality of articles including a first article and a second article; generate a page layout including at least a first layout region and a second layout region within the page layout area, a size of the first layout region based at least in part upon content of the first article, and the second layout region occupying a subdivision of a remaining area of the page layout area not occupied by the first layout region, a size and position of the second layout region thus being dependent in part on at least the dimensions of the page layout area and the size of the first layout region; and display, using the display interface, the first article in the first layout region and the second article in the second layout region in the page layout area in accordance with the page layout.

In one aspect of the electronic device, said device may further comprise a network communication interface, wherein the processor is further configured to execute computer readable instructions stored in the memory to: receive, using the network communication interface, the plurality of articles in a content feed, each of the plurality of articles including one or more article elements.

In another aspect, the processor may be further configured to execute computer readable instructions stored in the memory to: determine an article layout for the first article within the first layout region based at least in part upon content of the first article and the size of the first layout region.

In still another aspect, the processor may be further configured to execute computer readable instructions stored in the memory to generate the page layout by: subdividing the remaining area of the page layout area into one or more subdivisions having at least a minimum dimension and that are either horizontally adjacent or vertically adjacent to the first layout region; and assigning the second layout region to occupy one of said one or more subdivisions.

In yet another aspect, the size and position of the first layout region may be based upon a reference point of the page layout area.

These embodiments will be described and illustrated primarily in relation to electronic devices, such as wireless communication devices, communicating over wireless networks and public networks. It will be appreciated by those skilled in the art, however, that this description is not intended to limit the scope of the described embodiments to implementation on these particular systems or to wireless devices. For example, the methods and systems described herein may be applied to any appropriate communication device or data processing device adapted to communicate with another communication or data processing device using a network communication interface adapted to communicate over a fixed or wireless connection, whether portable or wirelessly enabled or not, whether provided with voice communication capabilities or not, and additionally or alternatively adapted to process data and carry out operations on data in response to user commands for any number of purposes, including productivity and entertainment. Thus, the embodiments described herein may be implemented on electronic devices adapted for communication or messaging, including without limitation cellular phones, smartphones, wireless organizers, personal digital assistants, desktop computers, terminals, laptops, tablets, handheld wireless communication devices, notebook computers, portable gaming devices, Internet-connected televisions, set-top boxes, digital picture frames, in-vehicle entertainment systems, entertainment devices such as MP3 or video players, and the like. Unless expressly stated, an electronic device may include any such device or any device capable of receiving a content feed and causing information therefrom to be displayed. As contemplated herein, the electronic device may have an integrated display interface, or may be configured to output data to be painted to an external display unit such as an external monitor or panel, television screen, projector, or virtual retinal display (via a data port or transmitter, such as a Bluetooth® transceiver, USB port, HDMI port, DVI port, and the like). References herein to a "display" or "display interface" are intended to encompass both integrated and external display units.

### Brief Description of the Drawings

In drawings which illustrate by way of example only embodiments of the present application, in which like reference numerals describe similar items throughout the various figures,

FIG. 1 is a block diagram of an embodiment of an electronic device.

FIG. 2 is a schematic diagram of an exemplary network topology for use with the electronic device of FIG. 1.

FIG. 3 is a schematic diagram of select components of the electronic device of FIG. 1.

FIG. 4 is a schematic diagram illustrating page flow in a reader application executing on the electronic device of FIG. 1.

FIG. 5 is a flowchart illustrating a process for receiving a content feed and displaying a page of articles from the content feed.

FIG. 6 is a flowchart illustrating a recursive process for laying out articles from the content feed at the electronic device of FIG. 1.

FIGS. 7 through 17 are schematic diagrams illustrating sequential subdivision of a page for displaying articles.

FIG. 18 is a flowchart illustrating a process for determining layout of article content.

FIGS. 19 through 26 are schematic diagrams illustrating layouts of article content in accordance with the process of FIG. 18.

FIGS. 27 through 29 are schematic diagrams illustrating alternative subdivisions of page for displaying articles.

FIG. 30 is a flowchart illustrating a process for laying out articles in a page.

In these accompanying drawings, illustrations of layouts may not necessarily be to scale and should not be considered to be thus limiting.

### Detailed Description

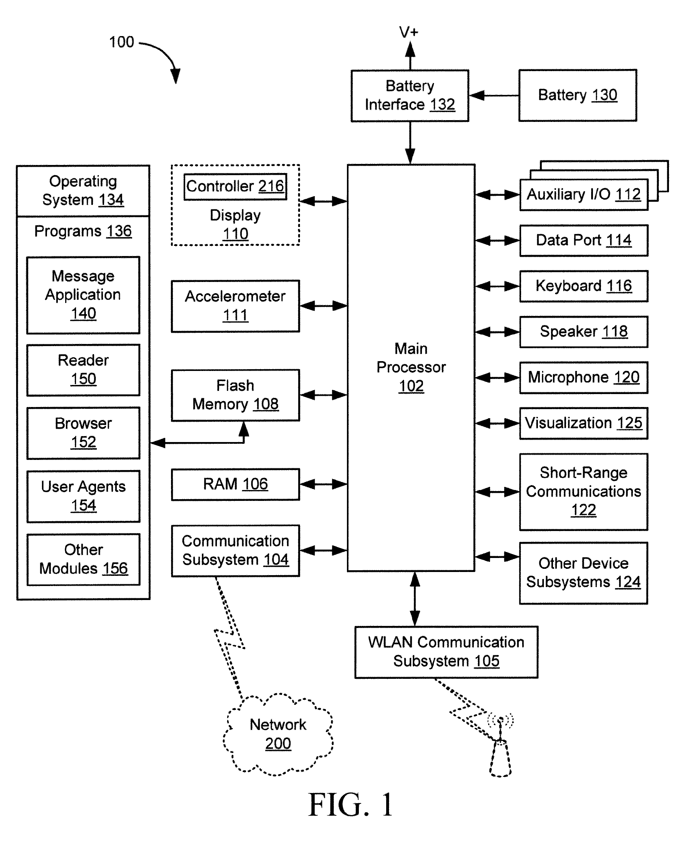

FIG. 1 is a block diagram of an exemplary embodiment of an electronic device 100 that may be used with the embodiments described herein. The electronic device 100 includes a number of components such as a main processor 102 that controls the overall operation of the electronic device 100. It should be understood that the components described in FIG. 1 are optional and that an electronic device used with various embodiments described herein may include or omit components described in relation to FIG. 1.

Communication functions, including data and voice communications, are performed through one or more communication subsystems 104, 105, and/or 122 in communication with the processor 102. Data received by the electronic device 100 can be decompressed and decrypted by decoder 103, operating according to any suitable decompression techniques, and encryption/decryption techniques according to one or more various encryption or compression standards known to persons of skill in the art.

If equipped with a communication subsystem 104, this subsystem 104 receives data from and sends data to wireless network 200. In this embodiment of the electronic device 100, the communication subsystem 104 is configured in accordance with one or more wireless communications standards. New wireless communications standards are still being defined, but it is believed that they will have similarities to the network behaviour described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for the wireless communications standard, and optionally other network communications.

The electronic device 100 may be provided with other communication subsystems, such as a wireless LAN (WLAN) communication subsystem 105 or a short-range and/or near-field communications subsystem 122 also shown in FIG. 1. The WLAN communication subsystem 105 may operate in accordance with a known network protocol such as one or more of the 802.11™ family of standards developed or maintained by IEEE. The communications subsystems 105 and 122 provide for communication between the electronic device 100 and different systems or devices without the use of the wireless network 200, over varying distances that may be less than the distance over which the communication subsystem 104 can communicate with the wireless network 200. The subsystem 122 can include an infrared device and associated circuits and/or other components for short-range or near-field communication.

It should be understood that any of the communication subsystems 104, 105, 122 may optionally be included in the electronic device 100. Alternatively, a communication subsystem comprised in a dongle or other peripheral device (not shown) may be connected to the electronic device 100, either wirelessly or by a fixed connection such as a USB port, to provide the electronic device 100 with access to a network. If provided onboard the electronic device 100, the communication subsystems 104, 105 and 122 may be separate from, or integrated with, each other.

The main processor 102 also interacts with additional subsystems, if present, such as a Random Access Memory (RAM) 106, a flash memory 108, a display 110, other data and memory access interfaces such as an auxiliary input/output (I/O) subsystem 112 or a data port 114, a keyboard 116, a speaker 118, a microphone 120, the communications 104, 105, 122 and other device subsystems 124. The communication device may also be provided with an accelerometer 111, which may be used to detect gravity- or motion-induced forces and their direction. Detection of such forces applied to the electronic device 100 may be processed to determine a response of the electronic device 100, such as an orientation of a graphical user interface displayed on the display assembly 110 in response to a determination of the current orientation of the electronic device 100. The electronic device 100 may be a battery-powered device including a battery interface 132 for receiving one or more rechargeable batteries 130.

In some embodiments, the electronic device 100 may comprise a touchscreen-based device, in which the display interface 110 is a touchscreen interface that provides both a display for communicating information and presenting graphical user interfaces, as well as an input subsystem for detecting user input that may be converted to instructions for execution by the device 100. The touchscreen display interface 110 may be the principal user interface provided on the electronic device 100, although in some embodiments, additional buttons, variously shown in the figures or a trackpad, or other input means may be provided. If a touchscreen display interface 110 is provided, then other user input means such as the keyboard 116 may or may not be present. The controller 216 and/or the processor 102 may detect a touch by any suitable contact member on the touch-sensitive display 110.

A visualization processor or module 125 may be included in the electronic device 100. The visualization module 125 analyzes and processes data for visualization on the display 110. Data originally prepared for visualization on a large-screen display may require additional processing prior to visualization on a small-screen display. This additional processing may be accomplished by the visualization module 125. As will be appreciated by those of skill in the art, the visualization module can be implemented in hardware, software, or a combination thereof, and can comprise a dedicated image processor and associated circuitry, or can be implemented within main processor 102.

The electronic device 100 also includes an operating system 134 and software components 136 to 152 which are described in more detail below. The operating system 134 and the software components 136 to 152 that are executed by the main processor 102 are typically stored in a persistent store such as the flash memory 108, which can alternatively be a read-only memory (ROM) or similar storage element (not shown). Those skilled in the art will appreciate that portions of the operating system 134 and the software components 140 to 152, such as specific device applications, or parts thereof, can be temporarily loaded into a volatile store such as the RAM 106. Select other modules 152 may also be included, such as those described herein. Other software components can also be included, as is well known to those skilled in the art.

A subset of software applications 136 that control basic device operations may be installed on the electronic device 100 during its manufacture. Other software applications include a message application 140 that can be any suitable software program that allows a user of the electronic device 100 to send and receive electronic messages. Various alternatives exist for the message application 140 as is well known to those skilled in the art. Messages that have been sent or received by the user are typically stored in the flash memory 108 of the electronic device 100 or some other suitable storage element in the electronic device 100. In at least some embodiments, some of the sent and received messages can be stored remotely from the device 100 such as in a data store of an associated host system with which the electronic device 100 communicates.

Other types of software applications can also be installed on the electronic device 100, such as feed or content readers 150, web browsers 152, other user agents 154, and other modules 156. These software applications may be supplied by the electronic device manufacturer or operating system provider, or may be third party applications. The additional applications can be loaded onto the electronic device 100 through at least one of the communications subsystems 104, 105, 122, the auxiliary I/O subsystem 112, the data port 114, or any other suitable device subsystem 124. This flexibility in application installation increases the functionality of the electronic device 100 and can provide enhanced on-device functions, communication-related functions, or both.

In use, a received signal such as a text message, an e-mail message, or web page download will be processed by the receiving communication subsystem 104, 105, 122 and input to the main processor 102. The main processor 102 will then process the received signal for output to the display 110 or alternatively to the auxiliary I/O subsystem 112. A subscriber can also compose data items, such as e-mail messages, for example, using the keyboard 116 in conjunction with the display 110 and possibly the auxiliary I/O subsystem 112. The auxiliary subsystem 112 can include devices such as: a touchscreen, mouse, track ball, infrared fingerprint detector, or a roller wheel with dynamic button pressing capability. The keyboard 116 may be an alphanumeric keyboard and/or telephone-type keypad. However, other types of keyboards can also be used. A composed item can be transmitted over the wireless network 200 through the communication subsystem 104. It will be appreciated that if the display 110 comprises a touchscreen, then the auxiliary subsystem 112 may still comprise one or more of the devices identified above.

The communication subsystem component 104 may include a receiver, transmitter, and associated components such as one or more embedded or internal antenna elements, Local Oscillators (LOs), and a processing module such as a Digital Signal Processor (DSP) in communication with the transmitter and receiver. The particular design of the communication subsystems 104, 105, 122, or other communication subsystem is dependent upon the communication network 200 with which the electronic device 100 is intended to operate. Thus, it should be understood that the foregoing description serves only as one example.

Content of interest to a user of the electronic device 100—works such as news reports, announcements, messages, and the like-can be delivered to the electronic device 100 over a network connection in a variety of formats. A common format for delivery of content to an electronic device 100, particularly where the content is frequently updated at the content source, is in a content feed presented in a syndication format such as RSS (known variously as Really Simple Syndication, Rich Site Summary, or RDF Site Summary), Atom Syndication Format, or other XML-based formats. Typically, a document containing content formatted in a syndication format (a content feed document) contains one or more channel elements (both content and metadata) relating generally to the feed source and the content feed itself as well as one or more items containing the content of interest (the work) or information about the work. The channel elements can include a title, hyperlink (uniform resource indicator) and brief description. The individual items (also referred to herein as articles) contained within the feed comprise elements that can include at least a title, publication date, hyperlink and/or a unique identifier, and a description. Typically, an individual item within a feed includes all of these elements, as well as others to more fully identify the item, such as author, source, a URI for retrieving comments posted in respect of the item, and enclosures (i.e., embedded media objects or elements, such as images and video).

The item contained within the syndication format document may not comprise the actual, complete work. If the work is a lengthy news report or blog posting, for example, it may not be desirable to include the entire content of the work within a syndication format document that is also intended to contain information about or content from many other articles, since this would inflate the size of the document to be transmitted to the electronic device 100. Thus, while in some cases the description element of the item may comprise the full text content of the work, in other cases the description element contains only a brief summary or a first portion of the text content of the work, with the full content being available at the hyperlink provided with the item. The preparation and formatting of content feed documents will be generally understood by those skilled in the art.

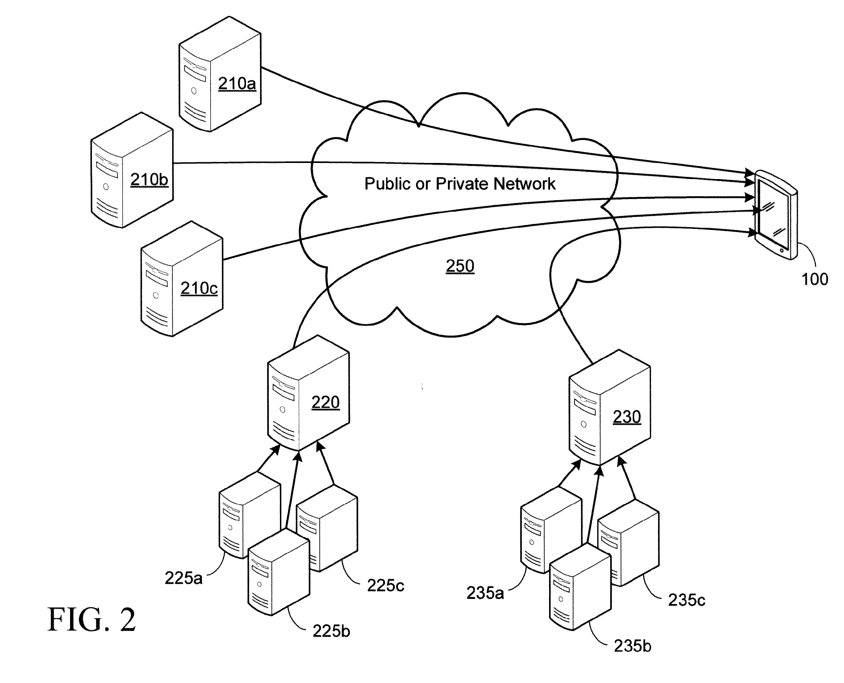

The source of a content feed document delivered to an electronic device 100 may be the original publisher of the items or articles contained in the feed, a distributor or republisher of the article, or an aggregation service collecting and compiling content feeds on behalf of the user of the electronic device 100. FIG. 2 illustrates examples of content feed flow from a number of sources to an electronic device 100. Some content feed documents may be compiled from articles published by a single source (i.e., the article publisher). Articles that may be represented in content feed documents include works such as news headlines and articles, stock quotations, weather and other alerts, blog postings, search engine alerts (i.e., notifications that a search engine has detected content matching specified keywords or other specified parameters), electronic forum postings, and photo libraries or picture collections. Thus, for example, a single source content feed may be served by a blogging platform, a news publisher, a photo hosting service, and so on. The publisher publishes a content feed document to a web server, and updates the content feed document with new items as new articles are published by the source. These single source feeds are represented by the servers 210a, 210b and 210c in FIG. 2. The electronic device 100 may transmit a request (typically an HTTP request) to one of the servers 210a, 210b, 210c to directly retrieve that server's content feed document.

In some cases, the content feed documents generated by the publishers may be retrieved by distributors who generate derivative feed documents by compiling selected items from the content feed documents sourced from the original publishers (for example, only those items relating to a specific topic of interest). These further feed documents can be considered to be "curated" feeds, as the distributor typically exercises some discretion in selecting items for inclusion in its derivative feed documents. The derivative feed documents may include original content produced by the distributors. The flow of content in this example is illustrated in FIG. 2 by servers 225a, 225b, and 225c, which represent original publishers. Feed documents published by at these servers are retrieved by the distributor's server 220, where a further feed document is compiled for retrieval by the electronic device 100.

Finally, content feed documents from original publishers and distributors alike may be retrieved by an aggregation service operating at a server system on the user's behalf. A user may use the aggregation service hosted at the server 230 to select one or more content feeds, represented by the servers 235a, 235b and 235c. The aggregation service, in turn, retrieves the content feed documents from those servers 235a, 235b, 235c and generates a content feed document customized according to the user's specifications. For example, the user may wish to subscribe to a number of blogs, news websites, and the like, but may only wish to receive articles matching a certain keyword to be included in the custom content feed, that is then retrieved from the aggregation server 230 by the electronic device 10.

It will be understood by those skilled in the art that the retrieval of content feed documents by the electronic device 100 may be carried out on an ad hoc basis, in response to an express user instruction at the device 100 to retrieve articles from a given source. The retrieved content feed documents can be processed and displayed by a client reader application or agent, which may be a standalone application executing on the electronic device, or incorporated into another application such as a web browser application. The user may also define subscriptions to one or more sources 210a..230 using the client reader application so that the reader application can request and receive updated content feed documents from the subscribed sources, either periodically or intermittently, without requiring the user's express intervention. Further, it will be understood that while the embodiments herein are described generally with reference to articles that are frequently updated, these embodiments may also apply to other types of works, such as reference articles (e.g. dictionary or encyclopaedia entries), provided that the articles are presented in a standardized format, such as a syndication format, parseable by a suitable client application for display to the user.

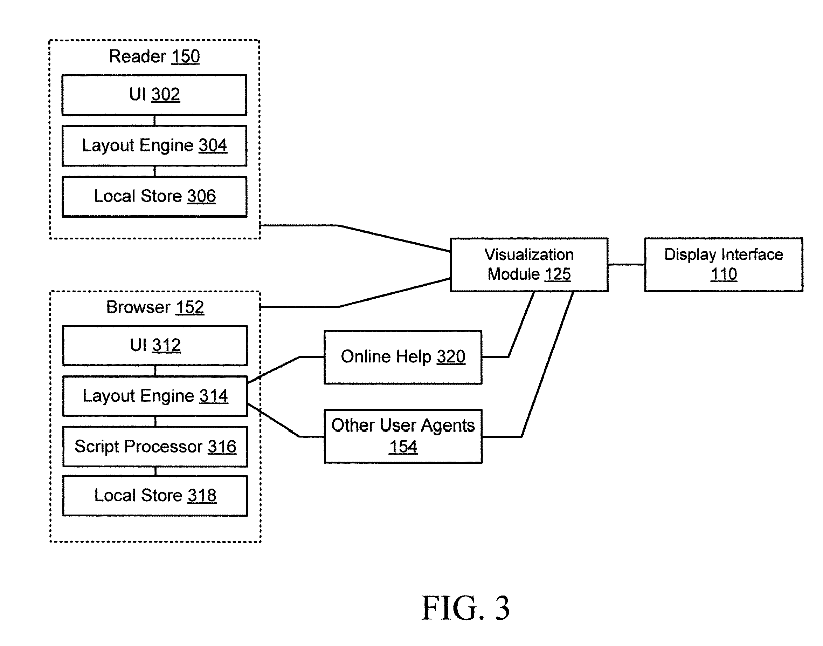

Select components or modules of such an application or agent, such as the reader application 150 and the browser 152 shown in FIG. 1, are illustrated in FIG. 3. The reader application 150 comprises a number of components that interoperate to process and provide the articles and other content within the content feed for display at a display interface 110, including a user interface engine 302, a layout or rendering engine 304, and a local store 306.

The browser application 152 may comprise interoperating components such as a user interface engine 312, layout or rendering engine 314, a script processor, plug-in, or virtual machine 316 for executing code snippets, scripts and the like embedded in, received with, or invoked by the resource being processed, as well as its own local store 316.

The layout engines 304, 314 of the reader application and the browser application 152 may be invoked by other applications on the electronic device 100. In FIG. 3, the browser layout engine 314 is illustrated as interoperating with an online help application 320 (i.e., an application for providing access to hyperlinked reference material), and other user agents 154. The online help application 320 and other user agents 154 may also, or alternatively, communicate with the layout engine 304 of the reader application 150. The content processed by the layout engine 314 is then provided to the visualization module 125 for processing for display on the display interface 110.

The layout engine 304, 314 may be configured to lay out the item elements from the received content feed document in a variety of page layouts and formats. The implementation of content feed services and standard content feed reader applications will be known to those skilled in the art. The various examples of content flow illustrated in FIG. 2, however, serve to illustrate that the length of the items within a given feed document received at the electronic device 100 may be somewhat unpredictable. Because in some cases an item may contain a complete article, or only a summary; may include pictures or other embedded media, or not; and because different publishers may have different policies regarding the size or number of elements to be included within each item content feed, the content feed document that is ultimately delivered to the electronic device 100 may not be consistent, especially if it is generated at a distributor server 220 or an aggregation service 230.

A traditional reader application may simply present each article extracted from the content feed document in a linear arrangement, in which the most recently published item from the content feed document is listed first on the reader screen displayed by the display interface, followed by the other articles from the content feed document arranged in reverse chronological order. In this arrangement, items of disparate length are easily presented for display on the reader application screen, since the amount of vertical space consumed by each articles can be extended to accommodate the entire length of the article. However, this linear arrangement tends to "push" earlier articles off the display screen, particularly if more recent articles are lengthy, with the result that they may not be noticed by the user unless the user scrolls the display screen to view them.

A reader application 150 according to at least one embodiment of the present disclosure may employ a magazine-like visual style in which more than one article is displayed near the top of the display screen.

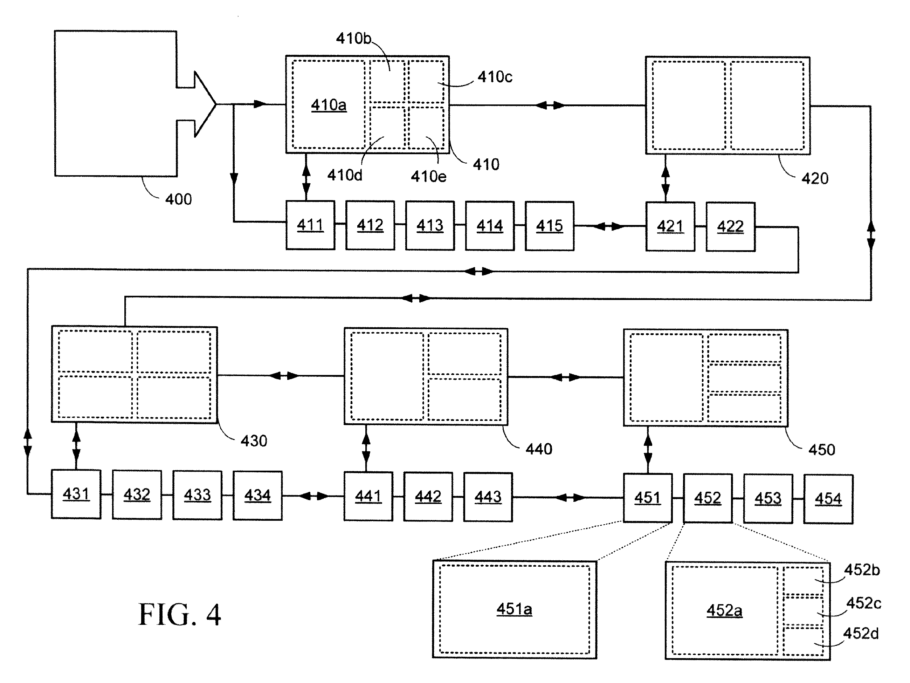

FIG. 4 illustrates possible page flow in a reader application 150 for a given content feed document 400 that is received and processed for display by a reader application 150. In this example, the content feed document 400 contains at least eighteen articles. When the content feed document 400 is received at the electronic device 100, the individual articles within the feed are extracted. In some embodiments, extracted articles are stored in a queue for subsequent retrieval by the reader application 150. The queue may be stored in persistent memory at the electronic device 100 for later retrieval, and may also include any images or other media files that are referenced in the content feed document 400. Thus, when the content feed document 400 is updated through receipt of a newer document 400 comprising newer articles than those previously received, these newer articles may be added to the queue together with the previously stored articles. It should be understood that the use of a queue is a non-limiting example, and that it is contemplated that the disclosed technology may be implemented using other techniques for organizing the articles to be displayed.

One or more pages 410, 420, 430, 440, 450 are generated for displaying the article content. The number of pages generated will depend on the number of articles within the content feed document or queue. Typically, the pages are populated with the articles in the queue or content feed document 400 in the order in which they appear in the content feed document 400; the most recent article is first article to be laid out on the first page to be generated, and so on.

Each individual page 410, 420, 430, 440, 450 may comprise one or more articles. In the example of FIG. 4, the first page 410 comprises five articles denoted by individual articles 411, 412, 413, 414, and 415, laid out in five layout regions 410a, 410b, 410c, 410d, 410e, respectively. The second page 420 comprises only two articles 421, 422, while the remaining three pages 430, 440, 450 comprise four, three, and four articles 431..434, 441..443, and 451..454 respectively. In alternative embodiments, the number of articles allocated per page may be the same, and the page layout of the articles on each page may be identical. Alternatively, in some embodiments, the page layout may vary from page to page as shown in FIG. 4. In the example of FIG. 4, the layout regions for articles on each page (as indicated by the phantom outlines on pages 410, 420, 430, 440, 450) may vary as well as the article count per page layout, according to factors such as article size, as well as possible randomization of page layouts from one page to another.

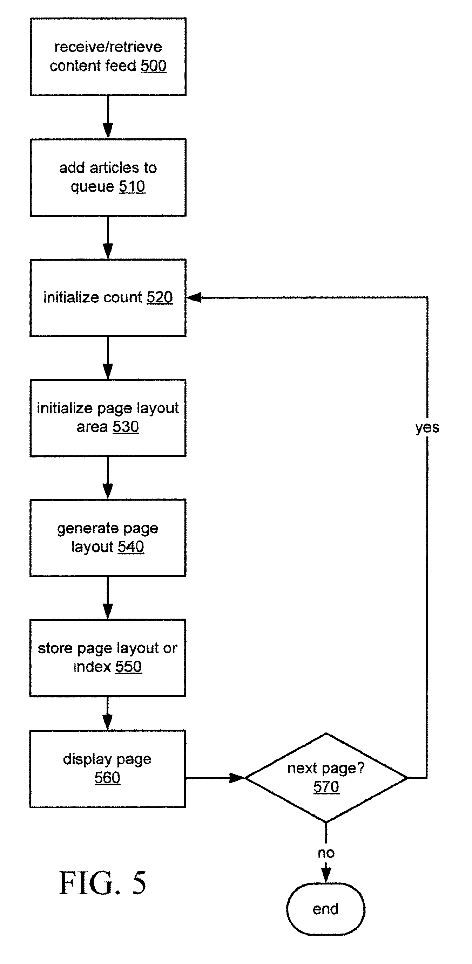

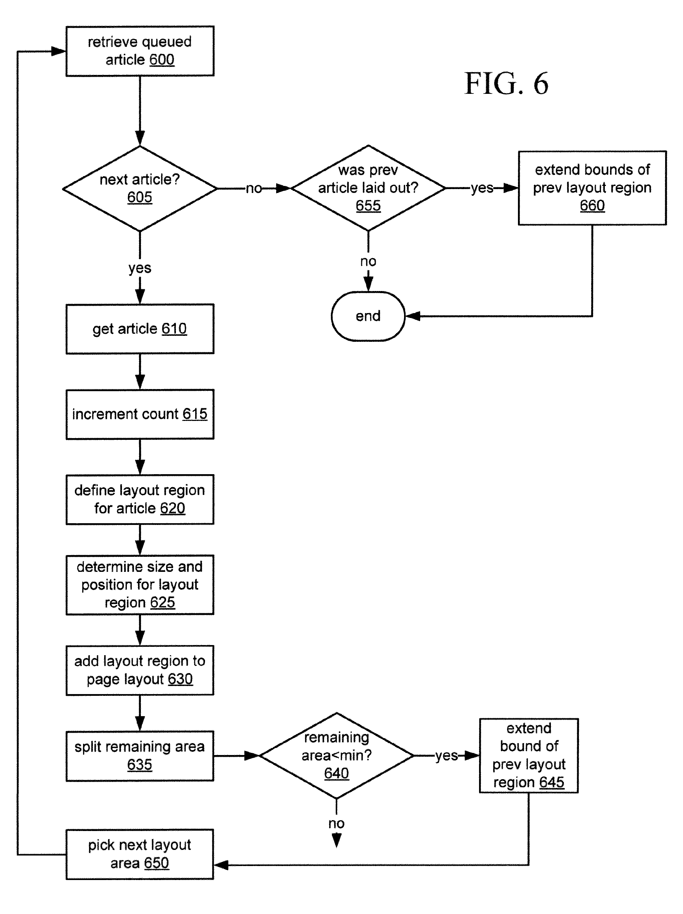

FIG. 4 illustrates that the reader application 150 may generate page layouts dynamically. The reader application 150 may retrieve articles and lay them out in each page layout according to a predetermined process such as that described below with reference to FIGS. 5 and 6. In response to a detected command, such as selection of a "next page" command in a context menu or actuation of a "next page" user interface element, the reader application 150 may retrieve further articles (from a queue or from a remote server), and continue with generating a page layout for the second page 420. Subsequently, in response to further "next page" commands, further pages 430, 440, 450 are generated by the reader application 150 from further articles in the content feed document 400 or queue, until no further articles are available. It will be appreciated by those skilled in the art that even further pages may be generated, even if further articles are not available in the current content feed document 400 received at the electronic device 100, by the reader application 150 initiating a request for further content over the network 200.

After each subsequent page 420, 430, 440, 450 is generated, the reader application 150 may still, in response to a "previous page" command (which may be implemented as described above for "next page") retrieve the previous page 410, 420, 430, 440 and display the previous page; or, if the previous page (or page layout details) had not been stored in memory, the reader application 150 may regenerate the previous page using the predetermined process. The reader application 150 thus presents articles in a magazine-like format, permitting the user to page through multiple articles per screen.

Each of the articles laid out on a page may comprise the entire content of the article, such as the description or full text content, as well as any images or other media objects referenced by the article item in the content feed document 100. Frequently, however, the article content is truncated due to space constraints on the page. Thus, the user may actuate a user interface elements associated with one of the layout regions 410a..410e or a command in a context menu for the page 410 to invoke a display screen comprising a view of a single article. From the first page 410, for example, the user may invoke a display screen for any one of articles 411..415; from the second page 420, the user may invoke a display screen for either article 421 or 422, and so on. Further, "next article" and "previous article" commands may be available to the user when viewing a single article, thus permitting the user to cycle through the articles without displaying the multi-article pages 410, 420, 430, 440, or 450. Example layouts of single articles on a page are depicted at 451a and 452a of FIG. 4. The single article in 451a comprises the sole content of the page, while the single article 452a is displayed alongside additional content 452b, 452c, 452d; this additional content may comprise related content, advertisements, and the like.

FIG. 5 provides an overview of the process followed by the reader application 150 when generating pages for display on the electronic device 100. At 500, the content feed is received by the electronic device 100 or retrieved from the local store 306, 318 or other memory at the device 100. In a primary embodiment, when the reader application 150 is launched, it transmits a request for updates for any feeds for which a subscription is registered. The reader application 150 may store a record of the last article that was received or marked as read, by date or by unique identifier, for each such feed, so that it need only request those articles that have not yet been received or read. Upon receipt of a response from the feed server, the articles are stored in the local store 306, 318. The articles may be stored in a single flat file, or alternatively the individual articles may be extracted from the received feed and stored as discrete units in the local store 306, 318. The articles received or retrieved are added to a queue 510 for processing by the reader application 150.

At 520, an article count variable is initialized (typically, assigned a zero value). At 530, the reader application 150 initializes a page layout area (also called an initial layout area) for a first viewing page in which the articles are to be displayed; i.e., the area of the displayable region of the device display interface 100 available to the reader application 150 for displaying articles. Typically the page layout area, as well as layout regions discussed below are rectangular in shape and may be defined in terms of an origin point (e.g., the x, y coordinates of the upper left-hand corner of the layout rectangle) and a length and width, or alternatively in terms of four coordinates corresponding to the four corners of the region. However, other shapes and dimensions could be used to segment a display space into regions. For example, in a three-dimensional display, layout regions may be defined by length, width, and depth in relation to a three-dimensional space available to display articles.

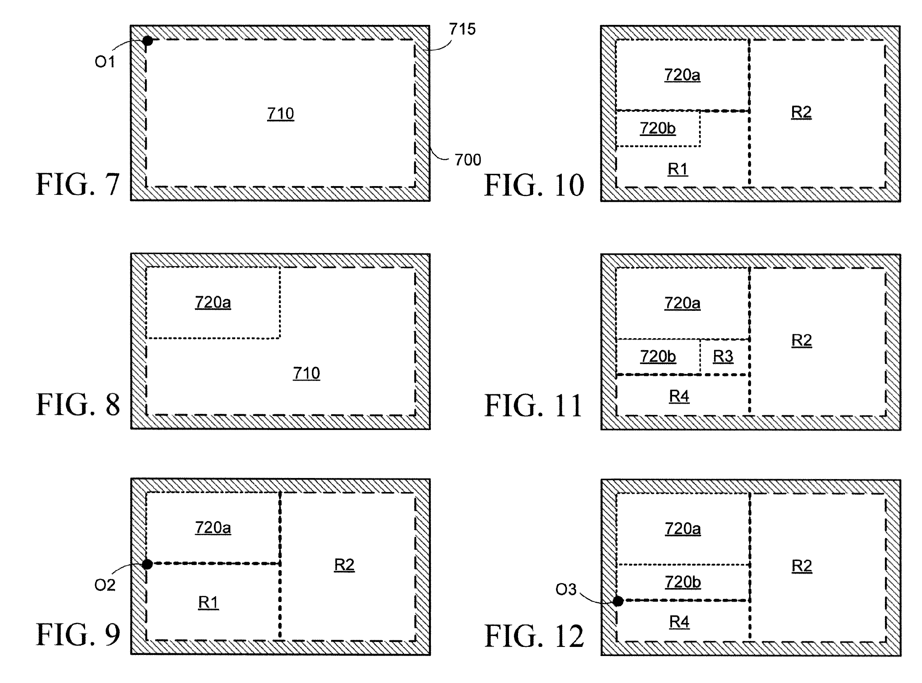

In the case of an electronic device 100 providing a windowed environment (i.e., in which graphical user interfaces for different applications are displayed in discrete and possibly overlapping windows presented at a device display), the initial layout area may comprise the area of a window. If the reader application 150 executes in a fullscreen mode, then the initial layout area may comprise the maximum displayable area of the display screen. Typically, however, the reader application 150 is display with chrome such as frames, title bars, menu bars, and the like, so the maximum displayable area available for display of articles may be limited to a smaller area, even in full screen mode. Referring to FIG. 7, for example, an initial layout area 710 is illustrated within the maximum displayable area of a display screen such as display interface 110 of the electronic device 100. The initial layout area may be surrounded by a margin 715; chrome features such as menu bars and other graphical user interface features may be displayed within the margin 715. The size of the margin 715 and the position of the initial layout area may be varied.

At 540, articles from the feed are laid out on the page (also referred to as generating or creating a page layout). As is well understood in the art, it is common to display a most recently received article in a feed first, and then display the rest in reverse chronological order; however, other orders are possible. For example, if the feed comprises search results, the feed may comprise "articles" (search results) in order of decreasing relevance to the input search keywords. Alternatively, articles in a feed may be organized according to priority, user preferences, frequency, etc. The layout process for this step is described in more detail with reference to FIGS. 6 and 7-17.

Once the page layout for the page is complete, the page layout may be stored in the local store 306, 318 for later retrieval. Alternatively a page rendered in this manner may be stored in the local store 306, 318 for later retrieval. In some embodiments, however, rather than store the actual rendered page or page layout, the reader application 150 may instead store configuration data for the page, such as an index value representing the article ID of the first article laid out on the page, or other indicia that may be used to reconstruct the page layout for a specific page. Optionally, an article count value for the page may also be stored (i.e., if nine articles were laid out on the page, then an identifier for the first article may be stored along with the value 9). Thus, if the user navigates away from this page once it is displayed, if the user requests display of this page again its layout may be recomputed without redetermining the layout (and number of articles consumed) by each preceding page. In addition, a global article count or index value representing the total number of articles from the feed that have been laid out on the current or other pages may be stored.

At 560, a page is displayed using the page layout and articles from the content feed. If a request to display a next page is determined to have been received at 570, then the count variable is re-initialized at 520 and the process repeats, starting with the next article after the last article to be displayed on the current page (as identified by the global article count).

The process for generating a page layout by the reader application at step 540 is set out in more detail in the flowchart of FIG. 6, which illustrates a recursive aspect of the process, and is illustrated in FIGS. 7 through 17. Briefly, the process begins with an initial layout area, which may comprise the entire available display area available for displaying articles from the content feed. Each article is retrieved from an article queue (which may be ordered in reverse chronological order) and laid out at a designated starting position, or reference point, in a layout region (in this case, rectangular-shaped) whose size is determined in part by the content of the article.

In this disclosure, a layout region is a portion of the layout area that is reserved (i.e. allocated) for displaying a particular article. It should be apparent to a person of skill in the art that a layout region may be variable in size and position. The size of a layout region may be based upon an amount of content available for a particular article to be displayed in the layout region. For example, the content may have variable length of text, various media elements, or various article elements associated with the article. The size of the article may be defined at least in part on the number of article elements associated with the article.

Once a first layout region is positioned in the current layout area, the remaining area of the current layout area surrounding the first layout region is then subdivided into zero or more further rectangular layout areas that are either horizontally or vertically adjacent to the first layout region in which an article was positioned. Thus, the remaining area may be defined by at least the dimensions of the current layout area and the size of the first layout region

For each one of these further layout areas, this process of allocating a layout region for an article and further subdivision is carried out until the remaining area available through subdivision is less than a minimum dimension. The remaining area at that stage may be added to the layout region allocated to the previously laid out article.

From step 540, the initial layout area 710 was defined. For the first article of a page layout, the page layout area (initial layout area) is assigned as the current layout area. The page layout area may be bounded or fixed in size and dimension by the physically available display area of the display interface 110, or by the area of the display interface 110 allocated for the reader application 150. Through iterations of the page layout process the subdivided remaining area of a page layout may be treated as a current layout area for purposes of assigning a layout region and further subdivision.

At block 600 of FIG. 6, an attempt to retrieve a next article from the queue is made. At 605 it is determined whether there is a next article in the queue. In this example, it is presumed that at least four articles are available in the content feed. At 610 the next article in the feed is retrieved, and at 615 the count variable is incremented by one. At 620, a layout region corresponding to that next article is then allocated to the current layout area, here the initial layout area, 710. The first layout region is positioned in the current layout area at a designated reference point. The reference point in this example is the upper left-hand corner of the current layout area, i.e. the origin point O1 indicated in FIG. 7. Thus, the first layout region 's coordinates in the initial layout area 710 are defined so that its origin point (upper left-hand corner) is positioned at 01.

A size for the first layout region is then determined at 625. The size is used to initially define the space allocated to the article in the current layout area. The size selected for the first layout region is determined in part on the basis whether the article comprises an image, which can be determined from the article data in the content stream. Further, in one embodiment, to maintain the number of articles displayed per page within a practical range, a maximum length and width is defined for article layout regions, and the size of the article restricted within the confines of the maximum and minimum dimensions thus defined.

A maximum and minimum length and height for an article layout region may be preset within the code executing on the electronic device 10, or else may be set through a user or administrator option. In some embodiments, maximum or minimum values may be provided within the content feed itself, and those maximum and minimum values applied to the process herein.

The maximum and minimum article length and width thus set may take into account the font size used to display content, the display screen resolution, and any margins or padding surrounding each individual article when displayed on the page. For example, the maximum and minimum dimensions may be dynamically changed according to selections of font size or screen resolution, if those settings can be varied at the electronic device 100. It will be appreciated by those skilled in the art that the selection of the article minimum and maximum width, and the definition of any padding or margins between the individual articles displayed is generally an aesthetic consideration, although selection of the minimum and maximum values will have a functional impact on the efficiency of the layout once the recursion process is complete since these values will impact the sizing and arrangement of articles on the page, as well as the number of articles displayable on the page. For an initial layout area 710 measuring 1024 pixels in width by 545 pixels in height (i.e., in landscape mode), a suitable minimum height may be approximately 149 pixels, and a minimum width 300 pixels. These minimum values provide sufficient space for arrangement of multiple articles with padding between them to improve legibility. In the description and illustrations herein, padding surrounding each article may be considered to be contained within the various layout regions allocated for each article.

It will be understood by those skilled in the art that the selection or definition of a minimum dimension or a maximum dimension may be influenced by the orientation of the display interface 110. In the examples herein, the display interface 110 is oriented in a landscape mode, which appears wider than it is high to the primary user of the device 100. In the case of a mobile or handheld electronic device, such as a tablet computer or smartphone, the device 100 may be configured to automatically alter its display between landscape and portrait mode when a change in orientation is detected by an accelerometer 111. The embodiments described herein are equally adaptable to both modes, and the illustration of the process of FIG. 6 in the landscape mode in FIGS. 7 through 17 should not be taken to be limiting these embodiments to landscape mode only.

To provide a degree of variety between page layouts, however, the article layout region size may also be determined in part by a variable factor. In one embodiment, a variable seed value is used to select either the article width or length, or both. The seed value may be determined from a quasi-random or random value, or else may be derived from the article content. For example, the number of characters in the article title may be used to assign either the minimum or maximum width: an even number of characters may result in the minimum width being chosen, and an odd number of characters would then correspond to selection of the maximum width. The height of the article layout region may be similarly determined. Generally, however, one dimension of the article layout region is determined in this manner (e.g. the width), then the layout engine 304, 314 lays out the article content according to that specified dimension. The remaining dimension (e.g., height) of the article layout region is then computed based on the page layout.

The choice to predetermine the width or the height in this manner may depend on the presence of an image in the article. For example, if the article comprises an image, then the width may be fixed as described above, and then the height determined by the layout. However the size of the article is determined, the width and height of the article layout region may be selected to fit within the available width and height of the current layout area, even if the article will not completely fill all the article layout region.

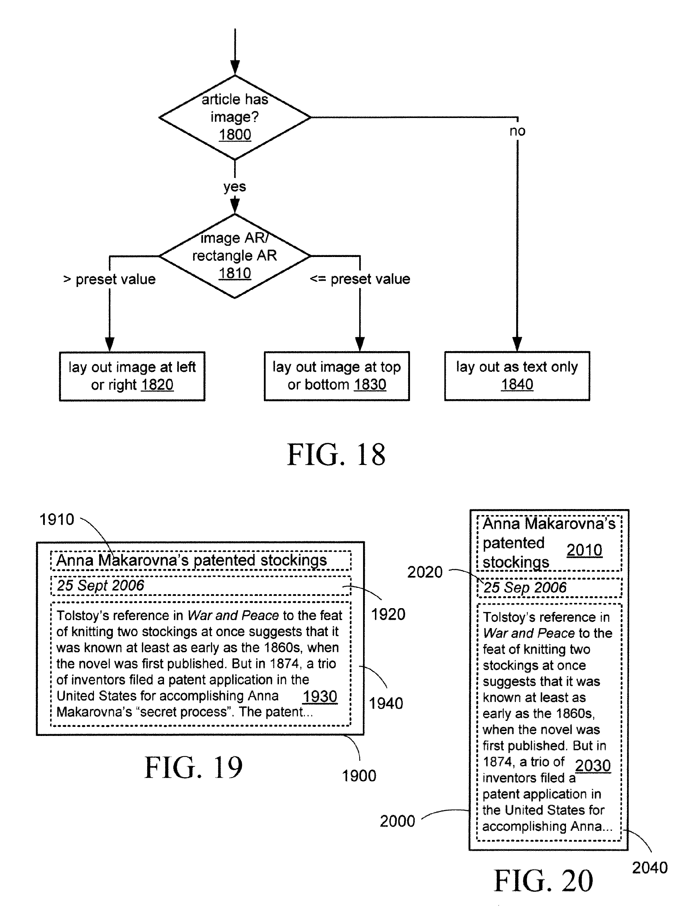

At 630, the article is then added to the page layout in the article layout region. Article elements, such as title, short description or long description, optional images or other media objects, and optional metadata such as date, author and source, and so forth, are retrieved from the local store and arranged within the article layout region allocated. The precise layout of the article within the dimensions of the article layout region may be determined arbitrarily, or rules may be applied to determine how any images are to be positioned within the allotted space and how text is to be flowed around those images. Text content in the article, such as the title or short or long description, may be truncated to fit within the space defined for the article layout region (and within any padding or internal margins defined in the article layout region), and images may be scaled to fit within the available dimensions in the article layout region. In some embodiments, the addition of the article to the page layout may be carried out once allocation of all article layout regions for the page layout is complete. Determination of the article layout is described in more detail with reference to FIG. 18 below.

An example of a first article layout region 720a placed within the initial layout area 710 is shown in FIG. 8. As described above, the article layout region defined for the first article is positioned at the upper left-hand corner of the initial layout area 710, since the upper left-hand corner in this example is the designated reference point. It will be appreciated by those skilled in the art that while the upper left-hand corner of a given area has been used in these examples as the starting origin point or reference point for positioning the layout region, the choice of the upper left-hand corner is a conventional selection. The reference point may be defined at a different location in the layout area, such as the lower right-hand corner or at a central point. The methods herein may be adapted for use with a different reference point. In this example, positioning of the article layout region 720a is carried out by defining the reference point (the upper left-hand corner) of the article layout region 720a at the reference point *O*1 of the layout area 710.

As a result of the placement of the first article layout region 720a on the initial layout area 710, space remains in the initial layout area 710 both below and above the first article layout region 720a. At 635, the remaining area is logically subdivided into two further layout areas, both rectangular in shape. Each of these further layout areas is likewise definable by an origin point (e.g., the position of their respective upper left-hand corners within the initial layout area 710) as well as by a width and height value. The further layout areas may also be referred to as subdivisions, subdivided layout areas or "child layout areas" (e.g. indicating that they represent a portion of the initial layout area but also define an area for placement of further article layout regions). As will be understood in this disclosure, the process of subdividing remaining space of the current layout area may be repeated for each of the subdivided layout areas. In other words, a subdivision, subdivided layout area or child layout area may be treated as a current layout area and further subdivided in to further additional layout areas.

As shown in FIG. 9, a first rectangular layout area R1 is defined below the first article layout region 720a. Layout area R1 has the same width as the first article layout region 720a and positioned to be vertically adjacent to the first article layout region 720a. A second rectangular layout areaR2 is defined to be horizontally adjacent to the first article layout region 720a, covering the remaining area of the initial layout area 710. The subdivision of the remaining area thus effectively defines two columns on the current layout area 710, in which the first column comprises the first article layout region 720a.

Alternatively, the remaining area defined at block 635 could be divided row-wise, where the first row extends across the current layout area 710 and has the same height as the first article layout region 720a. The further layout areas would still comprise one horizontally adjacent and one vertically adjacent layout area. The selection between subdivision of the remaining area in the current layout area 710 into two columns or rows may be made on a random or quasi-random basis, or may be determined based on the aspect ratio of the first article layout region 720a. For example, if the aspect ratio of the first article layout region 720a (height divided by width) is greater than a predetermined value, a column-wise subdivision (as illustrated in FIG. 9) may be selected, whereas if the aspect ratio is less than that predetermined value a row-wise subdivision is selected.

While in this example two subdivided layout area R1, R2 have been defined, in other embodiments only one, more than two, or even zero, areas are defined. For example, if the first article layout region 720a was sized to fill the entire initial layout area 710, both R1 and R2 would have a height and width of zero; thus, no child layout areas would be defined, and the process could terminate for that page, and the process recommenced for a next page. If the first article layout region 720a was sized to fill a full half of the initial layout area 710, then there would be only one non-zero size subdivided layout area (either horizontally or vertically adjacent to the first article layout region 720a) defined in the initial layout area 710.

At 640, it is then determined whether either of the subdivided layout areas R1, R2 has a dimension less than a minimum height or width. If it is determined that this is the case, then that area R1, R2 having a dimension less than the preset minimum dimension is included within the article layout region 720a just created. In this example, however, both areas R1 and R2 exceed the minimum dimensions.

Next, the process selects at 650 each of the subdivided layout areas R1, R2 in turn, and repeats the above layout and subdivision process beginning at block 600. In the case of a column-wise division as in FIG. 9, the next layout area selected is the vertically adjacent area to the current article layout region (i.e., the area, R1, immediately below the current article layout region 720a); once the layout and subdivision process is completed for that layout area, then same layout and subdivision process is carried out for the remaining layout area (i.e., R2). In the case of a row-wise subdivision, then the next layout area selected is the area horizontally adjacent (i.e., the area, R1, immediately beside the article layout region 720a), then after the layout and subdivision process is complete for that area, the vertically adjacent area is selected and the layout and subdivision process repeated. Thus, in this example, the subdivided layout area R1 is selected first for a further iteration.

Again at 600, the size of the subdivided layout region R1—which is now the current layout area in which the next article will be laid out-is compared to the minimum dimensions that have been preset for the article layout region size. In this case it is determined that it exceeds those dimensions. At 605 it is determined that there is a further article in the queue to be laid out; accordingly, at 610 that article is retrieved from the queue, the count value is incremented at 615, and a second article layout region defined for that article at 620. In this case, the second article layout region's reference point (in this embodiment, the upper left-hand corner) will be positioned at the reference point of the current layout area R1, which again is defined as the upper left-hand corner of that layout area R1. The reference point of R1, 02, is indicated in FIG. 9.

At 625 the dimensions of the second article layout region are determined as above, and at 630 the second article layout region is added to the page layout. The second article layout region 720b is shown in FIG. 10, where it is positioned vertically adjacent to (i.e., immediately below) the first article layout region 720a, and its upper left-hand corner is located at the upper left-hand corner of the layout area R1. As noted above, while these article layout regions 720a, 720b are positioned to be immediately adjacent, it may be recalled that white space or padding may be included within these boundaries so that when the article content is laid out within the article layout region, sufficient space is left between each article's content for readability.

Once the second article layout region 720b has been added, the remaining area in the current layout region R1 is then logically subdivided again to define two further layout areas at 635, as above. Again, a selection may be made between a row-wise and column-wise subdivision. Turning to FIG. 11, it can be seen that a row-wise subdivision was selected in this example, thus defining a third layout area R3 horizontally adjacent to the second article layout region 720b, and a fourth layout area R4 vertically adjacent to the second article layout region 720b. The third area R3 has the same height as the second article layout region 720b, while the width of the fourth area R4 extends across the width of the previous layout area R1.

At this point, the further check at 640 determines whether the remaining area in the layout area R1 has a dimension less than a minimum width or height. In this example, the remaining height beneath the second article layout region 720b-the height of the fourth layout area R4-is at least the preset minimum article height, but the remaining width beside this article layout region -the width of the third layout area R3-is less than the preset minimum article width. Accordingly, at 645, the size of the second article layout region 720b is adjusted by extending the bounds of that article layout region to include the horizontally adjacent third layout area, R3, as part of the second article layout region 720b. As can be seen in FIG. 12, the second article layout region 720b now extends the full width of the area R1. Accordingly, in this round of subdivision, only vertically adjacent area R4 remains.

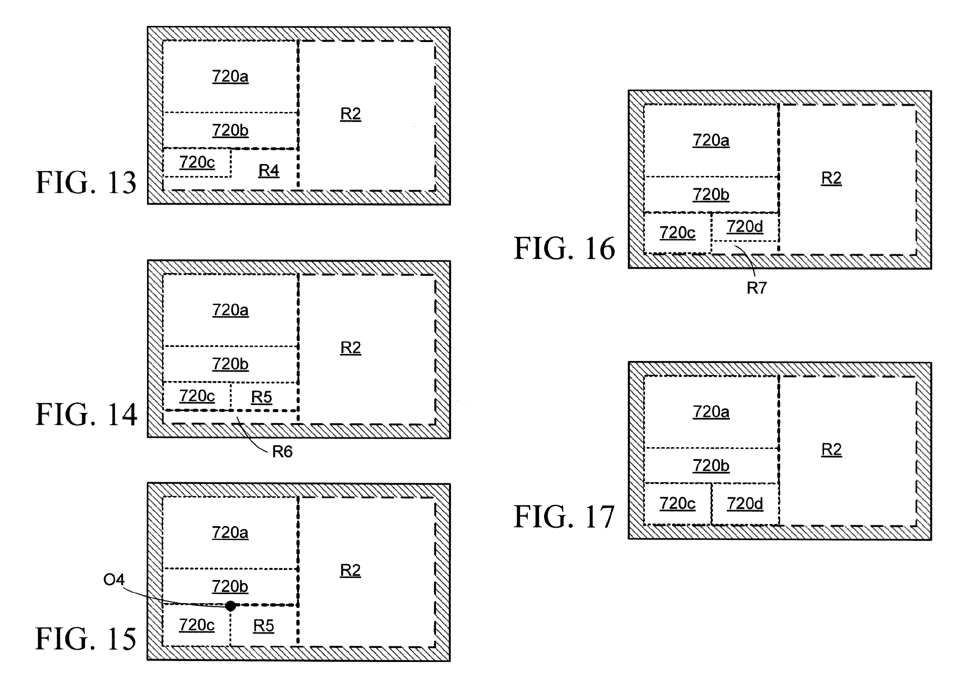

At 650, this remaining area R4 is selected, with its reference point 03 defined as its upper left-hand corner, which is the same reference point position previously defined for the initial layout area 710 and for layout area R1. The process again repeats starting at 600 with the creation of a third article layout region 720c positioned at the reference point 03, shown in FIG. 13. Again, the remaining area of the current layout area, in this case R4, is divided at 635, resulting in new layout areas R5 and R6 illustrated in FIG 14. Once these new child layout areas are defined, the determination is made again at 640 whether any dimension of the remaining area -the height of child layout area R6 or the width of the child layout area R5—is less than the corresponding preset minimum height or width. In this example, the child layout area R5 is equal to the minimum width, but R6 has less than the minimum height. Accordingly, at 645, the bounds of the immediately preceding article layout region 720c are extended to include a portion of area R6, by defining the lower bound of the article layout region 720c as the bottom of area R6, as shown in FIG. 14. The article layout region 720c thus extends to the edge of the initial layout area R1. As a result of the redefinition of the element 720c, the remaining area, child layout area R5, is redefined as the entire remainder of the previous layout area R4, as shown in FIG. 15.

At 650, the next layout area is selected, in this case R5. Its reference point 04 is again defined as the upper left-hand corner of the area. The process beginning at 600 is again repeated, with the result that a still further article is laid out in a further article layout region 720d, which is positioned with its upper left-hand corner at the reference point 04. In this example, the article layout region 720d is allocated a height and width that is equal to the minimum article height and width at 625, and accordingly it will fill the entire width of the child layout area R5, but not the entire height of area R5. Therefore, when the remaining area of R5 is split at 635, only one child layout area R7 is defined as shown in FIG. 16, vertically adjacent to the article layout region 720d. Again, at 640, it is determined whether the new child layout area R7 has a dimension that is less than the preset minimum height or width, and in this case the height of R7 is less than the minimum width. Therefore, at 645 the bounds of the article layout region 720d are extended to include the area R7, as shown in FIG. 17.

At this stage, there are no further child areas of the immediately preceding child layout area R5, or of the previous child layout areas R4, R3, or R1. Accordingly, at 650, the next layout area selected is the second layout area R2, which was defined after the first article layout region 720a was placed in the initial layout area 710. The process beginning at 600 is again repeated for the child layout area R2, which can result in several iterations of subdivision into further child layout areas. The iterations of the process of FIG. 6 end when no further layout area is available on the page, at which point the page may be displayed at the display interface 110, and/or a further page may be generated with the next article in the queue following the foregoing recursive process.

If it is determined at 605 during an iteration of the process of FIG. 6 that no further articles are available from the queue, then at 655 a determination is made whether an article had been laid out in the immediately previously defined child layout area. If not, then the process ends. If an article had been laid out, then the bounds of that article layout region corresponding are extended at 660 to include the current layout area. The process then ends.

For example, consider that in FIG. 17, no further articles were found at 605 after the fourth article that was laid out in the fourth article layout region 720d. At 655, a determination is made whether there was an article laid out in an article layout region in the immediately previously defined layout area. In this case, that would have been the area R7. However, no article was laid out in that child layout area, since it was less than the minimum height. Accordingly, the process ends.

Consider the further scenario in which there is only one article in the queue. Thus, only one article would be laid out in a first article layout region 720a, as shown in FIG. 8, and the entire remainder of the current layout area (in this case the initial layout area 710) subdivided into the two child layout areas R1, R2 as shown in FIG. 9. However, once the process returns to 605 and it is determined that no further articles are available, it is determined at 655 that there was an article laid out in the immediately previously defined layout area (in this case the initial layout area R1). Therefore, at 660, the bounds of the previous article layout region 720a would be extended to include the unallocated area of both R1 and R2, after which the process ends. When the article layout region size is redefined, the layout of the article elements within the redefined article layout region may need to be altered to fill the available space.

The article layout within its corresponding user interface element is described with further detail in FIG. 18. Example layouts are illustrated in FIGS. 19 through 27. It will be understood by those skilled in the art that the article elements from the content feed document may comprise both content (the article content itself, in text format, references to embedded media objects such as video or images, and a title) and metadata describing the content (publication date, author, unique reference identifier, source indicator, URI for the full article content, and so forth). Some metadata may be included for display in the article layout region, such as the publication date, author, and/or source indicator. The source indicator metadata, in particular, which may comprise a name or a URI for an image file for the publisher of the article, may be included in those cases where the feed document is received from a distributor or aggregation service.

Not all content need be laid out within the article layout region. For example, depending on the original width assigned to the article layout region, a hard limit may be placed on the displayable title length or displayable content length, and any characters in the title or content beyond that limit are truncated. In all cases, truncation of content may be indicated by the addition of ellipses at the end of the laid out content.

When the article includes a reference to a media element as article content, it may be generally desirable to retrieve and display the image within the article layout. The dimensions of the media element will therefore affect the layout of the article content in its article layout region. Determination of the article layout within the article layout region is illustrated with reference to an image in FIG. 18. At 1800 it is initially determined whether the article has an associated image. If not, the content is laid out as a text-only article at 1840. Examples of text-only layouts are illustrated in FIGS. 19 and 20. In FIG. 19, the article layout region 1900 is laid out in a landscape orientation with a single line of text provided for the title 1910. In some embodiments, multiple lines of text may be allocated to the title, particularly if the width of the article layout region 1900 is relatively small. A single line 1920 is further allocated for the date of publication and/or other metadata such as source or author. The balance of the article layout region is allocated to the text of the article 1930. These various elements of the article layout region are spaced both from each other and from the boundary of the article layout region by padding 1940. Turning to FIG. 20, when the article layout region 2000 is oriented in a portrait orientation, more than one line of text may be allocated to the title 2010, particularly where the width of the article layout region 2000 accommodates only a few words. Again, only one line may be allocated for metadata 2020, although multiple lines may be appropriate when the article layout region 2000 is narrow. The balance of the article layout region 2030 is allocated for text, and again all elements within the article layout region are surrounded by padding 2040.

Returning to FIG. 18, if the article includes a reference to an image, then the article layout will further include an image element, which requires a determination of image position within the article layout region. At 1810, then, either the image itself or metadata for the image is retrieved to compute the image's aspect ratio (height divided by width). The aspect ratio of the article layout region, which may include or exclude any padding extending along the article layout region's boundary, is also computed. The ratio of the image aspect ratio to the article layout region aspect ratio is then computed. If the ratio exceeds a preset value greater than 1, for example 1.1—meaning that the image is proportionately "taller" than the article layout region by at least 10%—then the image is laid out at either the left or right side of the article layout region at 1830, and the article text content is wrapped around or to the side of ("floated" around or beside) the image. The selection of the preset value may be considered to be at least in part an aesthetic consideration to balance the amount of article layout region dedicated to the image versus text, but also serves a function of optimizing the amount of text visible in the article layout region.

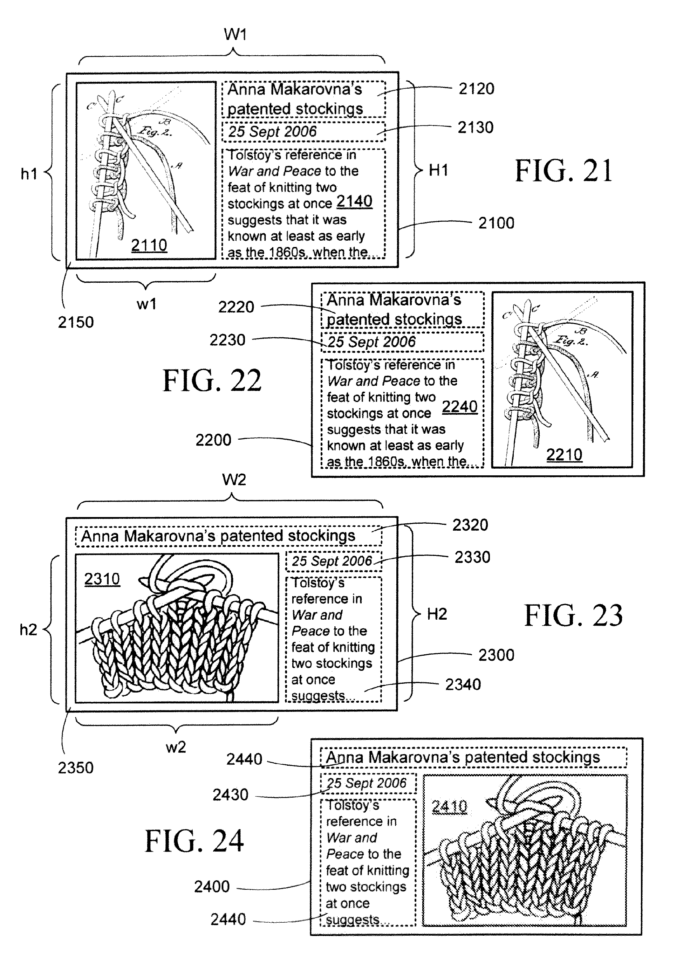

Examples of article layout region layouts with images positioned to the left or right of the article layout region are illustrated in FIGS. 21 to 24. In FIG. 21, a first article layout region 2100 illustrates the image 2110 positioned at the left side of the article text, with all remaining elements-title 2120, date (or other metadata) 2130, and text content 2140—flowed to the right of the image 2110. FIG. 21 illustrates the widths and heights used to compute the aspect ratios for both the image 2110 and article layout region 2100. The aspect ratio of the image 2110 is computed as h1/w1, while the aspect ratio of the article layout region 2100 is computed as H1/W1. As indicated in FIG. 21, the values of H1/W1 that are used for the latter ratio exclude the padding 2150 at the boundary of the article layout region 2100. Since the title 2120 as well as the text 2140 is floated to the right of the image 2119, in this embodiment the title 2120 is allocated more than one line if necessary, up to a predefined limit such as three lines. FIG. 22 illustrates a similar layout for an article layout region 2200 in which the image 2210 is floated to the right of the title 2220, date (or other metadata) 2230, and text content 2240.

In a further embodiment, the article title may not be floated to the side of the image, but instead is positioned above the image and across the entire width (minus padding) of the article layout region. An example of this is shown in FIG. 23, in which the image 2310 is floated to the left and the date (or other metadata) 2330 and text content 2340 is floated to the right of the image, but the title 2320 extends across the entire top of the article layout region 2300. Selection between this article layout and the article layout of FIG. 21 may be made on a random or quasi-random basis, or based on a seed value obtained from the article content or metadata. Alternatively, the use of the article layout in FIG. 23 may be selected when the aspect ratio of the image, h2/w2, is within a specified range (for example, if the aspect ratio is less than 1), or when ratio of the image aspect ratio to the article layout region aspect ratio (H2/W2) is within a specified range. Again, the width and height used to compute the aspect ratio of the article layout region 2300 may include or exclude the padding 2350 around the boundary of the article layout region 2300. FIG. 24 illustrates a similar article layout for an article layout region 2400 with the image 2410 floated to the right and the date (or other metadata) 2430 and text content 2440 floated to the left, with the title 2440 positioned across the top of the entire article layout region 2400.

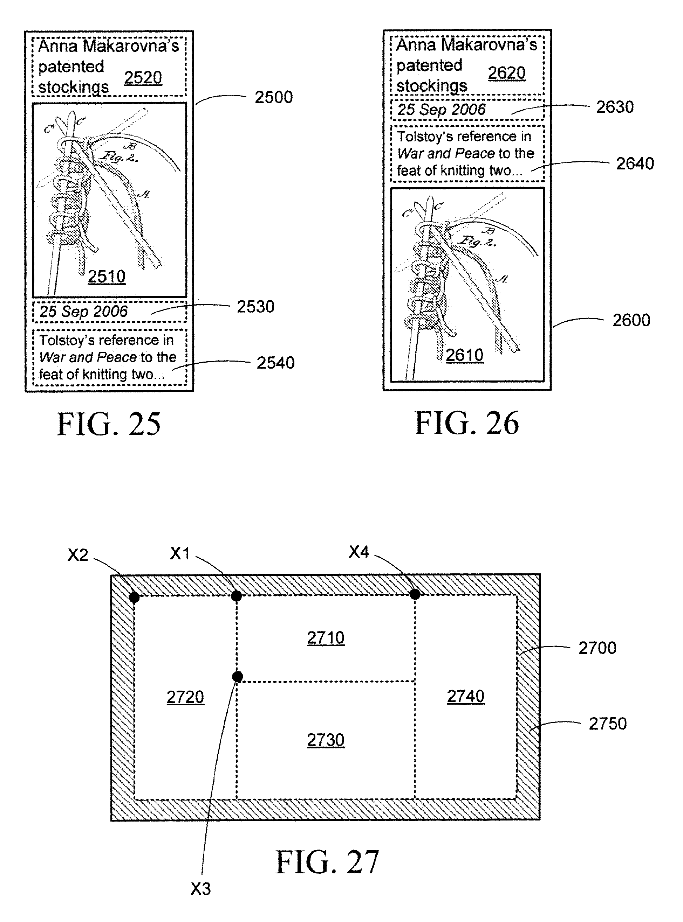

As shown in FIG. 18, if the ratio of the image aspect ratio to the article layout region aspect ratio is less than the preset value, then the image is positioned either at the top or bottom of the article layout region. Examples of this layout are shown in FIGS. 25 and 26. In FIG. 25, the image 2510 is positioned towards the top of the article layout region 2500, although still below the title element 2520. The remaining elements such as the date (or other metadata) 2530 and text content 2540 are positioned below the image 2510. In a further variation, the title 2520 may likewise be positioned below the image 2510, or the date 2530 may be positioned above the image 2510. In the article layout region 2600 of FIG. 26, the title 2620, date (or other metadata) 2630, and text content 2640 is positioned above the image 2610.

The selection of a left- or right-floating image 2110, 2210 (or 2310, 2410) or a top- or bottom-positioned image 2510, 2610 may be made on a random or quasi-random basis, or may be determined based on a seed value determined from the article content or metadata. Further, within a single page, once the first image in a first article layout region is positioned on a random or other basis, remaining images in other article layout regions may be positioned in the position opposite to the previously positioned image. In all the above layouts, the image may be scaled to fit within the article layout region dimensions.

The systems and methods disclosed herein are presented only by way of example and are not meant to limit the scope of the subject matter described herein. Other variations of the systems and methods described above will be apparent to those in the art and as such are considered to be within the scope of the subject matter described herein. For example, FIGS. 27 to 29 illustrate further variations in subdividing the initial layout area in the process of FIG. 6. In the embodiments described above, the remaining area of the initial layout area is subdivided into zero, one or two further subdivided layout areas. However, depending on the location of the initial article layout region allocated in the initial layout area, the remainder of the area may be logically subdivided a number of other ways, while still providing at least one subdivided layout area that is horizontally adjacent or vertically adjacent to the article layout region just allocated.

In FIG. 27, the first article layout region 2710 is positioned not at the upper left-hand corner of the initial layout area 2700, but is rather positioned so that it is centered at the top edge of the layout area 2700, and within any padding or margin 2750 allocated within the display screen. This scheme may be employed, for example, when the initial article is intended to be displayed as a "featured" article. In this example, then, the position of the first reference point X1 within the initial layout region will vary depending on the width assigned to the first article layout region 2710 in order to position the first article layout region 2710 in the centre of the area 2700. The remainder of the initial layout area is then subdivided into further rectangular child areas 2720, 2730, 2740. One child layout area 2730 is defined as the space between the first article layout region 2710 and the lower boundary of the initial layout area 2700, while the spaces on either side of the first article layout region 2710 and 2740 define two further child layout areas.

Once these child layout areas are defined, the recursive process described with reference to FIG. 6 may be carried out for each of these areas. However, the reference point used to position the article layout region(s) within each of these child layout areas need not be based on the same factors as the reference point X1 for the initial layout area 2710. In this example, the reference points X2, X3 and X4 may be the upper left-hand corner of their respective child layout area, in which case a subdivision scheme such as that described above with reference to FIG. 6 may be employed.

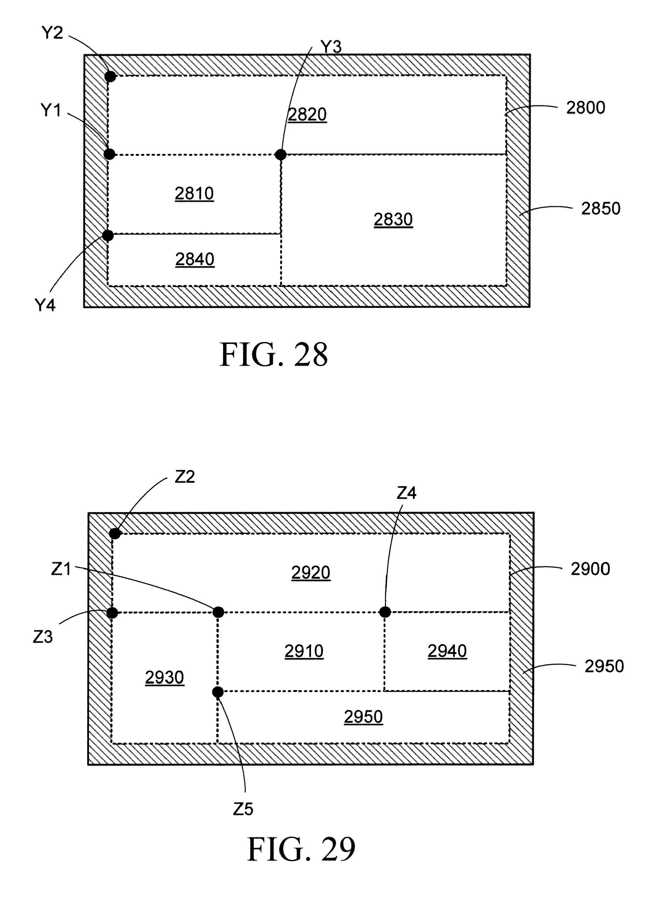

FIG. 28 illustrates the subdivision of a further initial layout area 2800, again within a margin or padding region 2850, in which the first article layout region 2810 position is offset from the top of the initial layout area 2800, as indicated by the first reference point Y1. Again, once the first article layout region 2810 is allocated in the initial layout area 2800, the child layout areas are defined as the area 2840 extending below the first article layout region 2810 to the bottom of the initial layout area 2800; the area 2830 extending from the first article layout region 2810 and the child layout area 2840 to the right edge of the initial layout area 2800; and the area 2820 extending between the first article layout region 2810 and the child layout area 2830 and the top boundary of the initial layout area 2800. For these child layout areas, as in the example of FIG. 27 the reference points Y2, Y3, Y4 for further allocation of article layout regions are positioned at the upper left-hand corner of each child layout area. Again, a subdivision scheme such as that described above with reference to FIG. 6 may be employed.

The example of FIG. 29 illustrates a subdivision scheme for the initial layout area 2900 within a margin or padding region 2950 in which four child areas are created. The first article layout region 2910 allocated within the initial layout area 2900 is offset from both the top and the left-hand side of the area 2900, for example at a fixed x, y position identified as Z1. Once the first article layout region 2910 is allocated, the remainder of the area in the initial layout area 2900 is subdivided to provide adjacent child areas 2920, 2930, 2940, 2950 on all sides of the first article layout region 2910. Once again, however, the subdivision of each of these child layout areas may be carried out with a different (non-offset) reference point Z2, Z3, Z4, Z5, positioned at the upper left-hand corner of the child layout area 2920, 2930, 2940, 2950 respectively.

Further, while in the embodiments described above the ordering of articles as they are laid out expressly or impliedly follows a reverse chronological ordering, it will be appreciated that the articles may be queued in the content feed document, or ordered by the reader application 150 itself, according to a different criterion such as relevance (in the case of search results), alphabetical order by title, by author, and so forth. Articles within the content feed document may also be flagged for emphasis or flagged as "sticky", so that the first article within the feed document thus flagged is always positioned in the first article layout region allocated on the page, even if that flagged article does not appear at the beginning of the content feed document.

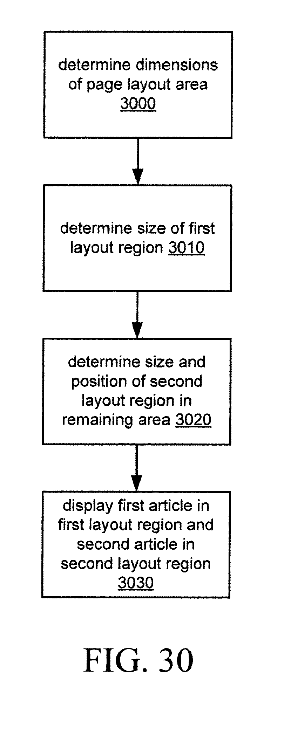

Thus, the foregoing embodiments provide a method and system for displaying articles at an electronic device. An overview is illustrated in the flowchart of FIG. 30. At 3000, dimensions of the page layout area for display are determined. At 3010, a size is determined for the first layout region, the size being based at least in part upon the content of a first article. The size and position of a second layout region is determined at 3020, where the second layout region occupies a subdivision of a remaining area of the page layout area that is not occupied by the first layout region. The second layout region size and position are dependent at least in part on the dimensions of the page layout area, and on the size of the first layout region. At 3030, the first article is displayed in the first layout region, and the second article is displayed in the second layout region thus defined. This process may be repeated for further articles in the remaining space of the subdivision in which the second layout region was defined that is not occupied by the second layout region.

It will be appreciated by those skilled in the art that the foregoing embodiments may be implemented in any appropriate manner for display by the reader application 150 or other application used to lay out and display articles, such as the browser application 152, or any other suitable application. Layout of the article elements may be accomplished using any appropriate formatting and/or rendering technique. As one non-limiting example, the article layout regions may be defined as block-level containers within the body of a document contained within the page or screen.

It should be understood that steps and the order of the steps in the processing described herein may be altered, modified and/or augmented and still achieve the desired outcome. Throughout the specification, terms such as "may" and "can" are used interchangeably and use of any particular term should not be construed as limiting the scope or requiring experimentation to implement the claimed subject matter or embodiments described herein.

The systems' and methods' data may be stored in one or more data stores. The data stores can be of many different types of storage devices and programming constructs, such as RAM, ROM, flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. Various functional units described herein have been expressly or implicitly described as modules and agents, in order to more particularly emphasize their independent implementation and operation. It is also noted that an agent, module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code. The various functional units may be implemented in hardware circuits comprising custom VLSI circuits or gate arrays; field-programmable gate arrays; programmable array logic; programmable logic devices; commercially available logic chips, transistors, and other such components. Modules implemented as software for execution by a processor or processors may comprise one or more physical or logical blocks of code that may be organized as one or more of objects, procedures, or functions. The modules need not be physically located together, but may comprise code stored in different locations, such as over several memory devices, capable of being logically joined for execution. Modules may also be implemented as combinations of software and hardware, such as a processor operating on a set of operational data or instructions.

A portion of the disclosure of this patent document contains material which is or may be subject to one or more of copyright, design patent, industrial design, or unregistered design protection. The rights holder has no objection to the reproduction of any such material as portrayed herein through facsimile reproduction of the patent document or patent disclosure, as it appears in the Patent and Trademark Office patent file or records, but otherwise reserves all rights whatsoever.

## Claims

1. A method in an electronic device, the method comprising:
determining dimensions of a page layout area available to display a plurality of articles including a first article and a second article;
generating a page layout, the page layout including at least a first layout region and a second layout region within the page layout area, a size of the first layout region based at least in part upon content of the first article, and the second layout region occupying a subdivision of a remaining area of the page layout area not occupied by the first layout region, a size and position of the second layout region thus being dependent in part on at least the dimensions of the page layout area and the size of the first layout region; and
displaying the first article in the first layout region and the second article in the second layout region in accordance with the page layout.

2. The method of claim 1, wherein the dimensions of the page layout area are determined based upon an orientation of the electronic device.

3. The method of either claim 1 or 2, further comprising:
receiving the plurality of articles in a content feed, each of the plurality of articles including one or more article elements.

4. The method of claim 3, wherein the page layout is generated in further dependence on how many articles are included in the plurality of articles.

5. The method of claim 3 or claim 4, wherein the page layout is generated in further dependence on a quantity of article elements associated with ones of the plurality of articles.

6. The method of any one of claims 3 to 5, wherein the page layout is generated in further dependence on whether a media element is associated with ones of the plurality of articles.

7. The method of any one of claims 3 to 6, wherein the plurality of articles comprises a syndicated content feed document.

8. The method of any one of the preceding claims, further comprising:
determining an article layout for the first article within the first layout region based at least in part upon content of the first article and the size of the first layout region.

9. The method of any one of the preceding claims, wherein said generating comprises:
subdividing the remaining area of the page layout area into one or more subdivisions having at least a minimum dimension and that are either horizontally adjacent or vertically adjacent to the first layout region; and
assigning the second layout region to occupy one of said one or more subdivisions.

10. The method of claim 9, wherein the size and position of the first layout region is based upon a reference point of the page layout area.

11. The method of claim 10, wherein the reference point is an upper left-hand corner of the page layout area.

12. The method of claim 11, wherein a size and position of the second layout region is based upon a second reference point relative to said one of said one or more subdivisions.

13. The method of claim 9, wherein said generating further comprises:
determining a new remaining area of said one of said one or more subdivisions not occupied by the second layout region;
subdividing the new remaining area into one or more new subdivisions having at least the minimum dimension and that are either horizontally adjacent or vertically adjacent to the second layout region; and
assigning a third layout region to occupy one of said one or more new subdivisions.

14. The method of claim 13, wherein subdividing the new remaining area comprises:
if during the subdividing one of the one or more new subdivisions does not have at least the minimum dimension, including the area of said one of the one or more new subdivisions as part of the second layout region.

15. An electronic device configured to execute the methods of any one of claims 1 to 14.
